# EUROPEAN PATENT APPLICATION

(11) **EP 4 691 332 A1**
(43) Date of publication of application: **11.02.2026**
(21) Application number: 24777632.1
(22) Date of filing: 04.03.2024
(51) Int. Cl.: A47L 11/24

(54) **SELF-MOVING DEVICE AND CONTROL METHOD THEREFOR, STORAGE MEDIUM, AND COMPUTER DEVICE**

(30) Priority: 27.03.2023 CN 202310305786
(71) Applicant: Beijing Roborock Innovation Technology Co., Ltd., Beijing 102206 (CN)
(72) Inventor: YAN, Baoguang, Beijing 102206 (CN)
(74) Representative: Potter Clarkson
(86) International application number: PCT/CN2024/079854
(87) International publication number: WO 2024/198842

(57) **Abstract**

A self-moving device (100) and a control method therefor, a storage medium, and a computer device. The self-moving device (100) comprises a camera module (123), a first processor (180), and a second processor (190), wherein the camera module (123) is used for acquiring an image signal of a surrounding environment of the self-moving device (100) and sending the image signal to the first processor (180); the first processor (180) is used for receiving the image signal and establishing a surrounding environment map of the self-moving device (100) and/or identifying an obstacle in the surrounding environment of the self-moving device (100) according to the image signal; and the second processor (190) is used for controlling the connection/disconnection between the first processor (180) and the camera module (123) according to the operation state of the self-moving device (100), so as to control whether the first processor (180) can receive the image signal sent by the camera module (123). Therefore, the connection/disconnection between the first processor (180) and the camera module (123) matches the operation state of the self-moving device (100), so that the risk of privacy exposure of a user by the camera module (123) is reduced, thereby improving the use security of the device.

## Description

### CROSS-REFERENCE TO RELATED APPLICATIONS

The present disclosure claims priority to Chinese Patent Application No. 202310305786.7, filed on March 27, 2023 and entitled "SELF-MOVING DEVICE AND CONTROL METHOD THEREOF, STORAGE MEDIUM, AND COMPUTER DEVICE", which is incorporated herein by reference in its entirety.

### TECHNICAL FIELD

The present disclosure relates to the field of control technologies of self-moving devices, and in particular, to a self-moving device and a control method thereof, a storage medium, and a computer device.

### BACKGROUND

In the technical field of self-moving devices such as a ground sweeping robot, a camera module undertakes various functions such as laser acquisition, image acquisition and recognition, and environmental information acquisition. Based on information collected by the camera module, the self-moving device can build a surrounding environment map, or perform obstacle recognition, or the like.

### SUMMARY

In view of this, the present disclosure provides a self-moving device and a control method thereof, a storage medium, and a computer device, such that a connected/disconnected state between a first processor and a camera module can be matched with a running state of the self-moving device, thereby reducing a risk that the camera module exposes user's privacy, and enhancing operational security of the self-moving device.

According to a first aspect of the present disclosure, a self-moving device is provided. The self-moving device includes a camera module, a first processor, and a second processor, wherein the camera module is configured to acquire an image signal of a surrounding environment of the self-moving device, and send the image signal to the first processor; the first processor is configured to: receive the image signal, build a map of the surrounding environment of the self-moving device based on the image signal, and/or recognize an obstacle in the surrounding environment of the self-moving device; and the second processor is configured to control, based on a running state of the self-moving device, the first processor and the camera module to be connected and disconnected, thereby controlling whether the first processor can receive the image signal sent by the camera module.

Further, when the self-moving device is in an operating state, the second processor controls the first processor and the camera module to be connected; and when the self-moving device is in a non-operating state, the second processor controls the first processor and the camera module to be disconnected.

Further, the self-moving device further includes a tri-state output circuit disposed between the first processor and the camera module.

Further, when the self-moving device is in the operating state, the second processor sends an enable signal to the tri-state output circuit, such that the first processor and the camera module are connected; and when the self-moving device is in the non-operating state, the second processor sends a disable signal to the tri-state output circuit, such that the first processor and the camera module are disconnected.

Further, the first processor is further configured to detect the running state of the self-moving device, and send a detection result to the second processor.

Further, the self-moving device is a self-moving cleaning device.

Further, the operating state includes a cleaning state or a traveling state.

Further, the non-operating state includes: a charging state, a washing state, a dust collecting state, a water replenishing state, a sleep state, or an off state.

According to a second aspect of the present disclosure, a control method of a self-moving device is provided. The method is applied to the second processor of the self-moving device according to any one of items in the first aspect; and the method includes: acquiring a running state of the self-moving device; and controlling, based on the running state of the self-moving device, the first processor and the camera module to be connected and disconnected, thereby controlling whether the first processor can receive the image signal sent by the camera module.

Further, controlling, based on the running state of the self-moving device, the first processor and the camera module to be connected and disconnected includes: when the self-moving device is in an operating state, controlling the first processor and the camera module to be connected; and when the self-moving device is in a non-operating state, controlling the first processor and the camera module to be disconnected.

A third aspect of the present disclosure further provides a storage medium, having a computer program stored thereon, wherein the computer program, when executed by a processor, implements the steps of the control method of the self-moving device according to any one of items in the second aspect.

A fourth aspect of the present disclosure further provides a computer device, including a memory, a processor, and a computer program stored in the memory and runnable on the processor, wherein the computer program, when executed by the processor, implements the steps of the control method of the self-moving device according to any one of items in the second aspect.

The above description is merely a summary of the technical solutions of the present disclosure. In order to make the technical means of the present disclosure understood more clearly and implemented in accordance with the content of the specification, and in order to make the above and other objectives, features and advantages of the present disclosure more obvious and comprehensible, specific implementations of the present disclosure are specifically listed below.

### BRIEF DESCRIPTION OF THE DRAWINGS

The following accompanying drawings of the present disclosure are used herein as part of embodiments of the present disclosure to help understand the present disclosure. Embodiments of the present disclosure and descriptions thereof shown in the accompanying drawings are used to explain the principle of the present disclosure.

In the accompanying drawings:
FIG. 1 is a schematic structural diagram of a self-moving device according to an embodiment of the present disclosure;
FIG. 2 is a schematic structural diagram of the embodiment shown in FIG. 1 from another perspective;
FIG. 3 is a schematic structural diagram of the embodiment shown in FIG. 1 from still another perspective;
FIG. 4 is a schematic diagram of part of a circuit connection of a self-moving device according to an embodiment of the present disclosure;
FIG. 5 is a schematic flowchart of a control method of a self-moving device according to an embodiment of the present disclosure; and
FIG. 6 is a schematic diagram of an electronic structure of a computer device according to an embodiment of the present disclosure.

Description of the reference signs:
100: self-moving device; 110: body; 111: forward portion; 112: backward portion; 113: dust outlet; 114: water inlet; 120: perception system; 121: position determining apparatus; 122: bumper; 123: camera module; 130: charging contact electrode; 140: driving system; 141: driving wheel module; 142: driven wheel; 150: cleaning system; 151: dry cleaning system; 152: side brush; 153: wet cleaning system; 160: human-machine interaction system; 170: tri-state output circuit; 180: first processor; 190: second processor; 601: processing apparatus; 602: ROM; 603: RAM; 604: bus; 605: I/O interface; 606: input apparatus; 607: output apparatus; 608: storage apparatus; and 609: communication apparatus.

### DETAILED DESCRIPTION

In the following description, a large number of specific details are provided to understand the technical solutions provided by the present disclosure more thoroughly. However, it is apparent to those skilled in the art that the technical solutions provided by the present disclosure may be implemented without one or more of these details.

It should be noted that the terms used herein are only intended to describe specific embodiments rather than to limit the exemplary embodiments according to the present disclosure. The singular forms as used herein are also intended to include the plural forms unless otherwise indicated clearly in the context. Furthermore, it should also be understood that the terms "include" and/or "comprise" used in the present Description specify the existence of the stated features, integers, steps, operations, elements and/or components, but do not exclude the existence or addition of one or more other features, integers, steps, operations, elements, components and/or combinations thereof.

The exemplary embodiments according to the present disclosure will now be described in more detail with reference to the accompanying drawings. However, these exemplary embodiments may be implemented in a variety of different forms and should not be construed as being limited to the embodiments set forth herein. It should be understood that these embodiments are provided to make the disclosure of the present disclosure thorough and complete and to fully convey the concepts of these exemplary embodiments to those of ordinary skill in the art.

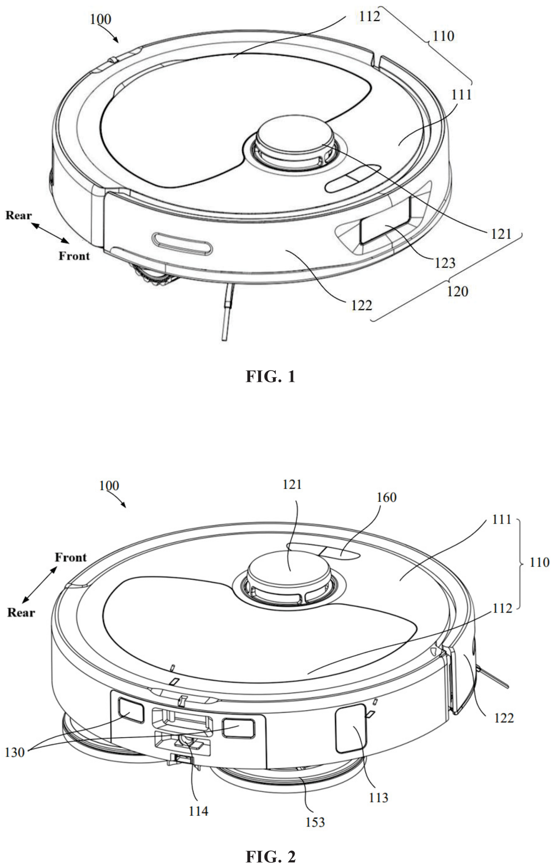

An embodiment of the present disclosure provides a possible application scenario, which includes a self-moving device 100. The self-moving device 100 may be a self-moving cleaning device. FIG. 1 to FIG. 3 are schematic structural diagrams of a self-moving cleaning device according to an exemplary implementation of the present disclosure. As shown in FIG. 1 to FIG. 3, the self-moving device of the present disclosure may be a mopping robot, a sweeping and mopping integrated machine, etc. For ease of description, this implementation describes the technical solution of the present disclosure by using an example in which the self-moving device 100 is a sweeping and mopping integrated machine. It should be noted that in other embodiments, the self-moving device 100 may be other device that meets requirements, such as a weeding robot, a food delivery robot or a window cleaning robot.

Further, as shown in FIG. 1, FIG. 2, and FIG. 3, the self-moving device 100 may include a body 110, a perception system 120, a driving system 140, a cleaning system 150, an energy system, a human-machine interaction system 160, and a first processor 180. It may be understood that the self-moving device 100 may be a self-moving cleaning device. The self-moving cleaning device is a device that automatically performs a cleaning operation in a certain region to be cleaned without users' operation. When the self-moving device 100 starts to work, the self-moving device 100 sets out from a base station to perform a cleaning task. When the self-moving device 100 completes the cleaning task or when the cleaning task needs to be suspended in other cases, the self-moving device 100 may return to the base station for charging, and/or water replenishing, and/or washing, and/or dust collection, and/or other operations.

As shown in FIG. 1 and FIG. 2, the body 110 includes a forward portion 111 and a backward portion 112, has an approximately circular shape, and may have other shapes, including, but not limited to, an approximately D-shape with a square front and a circular rear, and a rectangular or square shape with a square front and a square rear.

As shown in FIG. 1 and FIG. 2, the perception system 120 includes a position determining apparatus 121 located on the body 110, a collision sensor and a proximity sensor disposed on a bumper 122 at the forward portion 111 of the body 110, a cliff sensor disposed at the lower portion of the body 110, and a magnetometer, an accelerometer, a gyroscope, an odometer and other sensing apparatuses disposed in the body 110, for providing the first processor 180 with various position information and motion state information of the machine. The position determining apparatus 121 includes, but is not limited to, a camera module 123 and a laser distance sensor (LDS, laser distance sensor in full name). As shown in FIG. 1, the camera module 123 is disposed at a lateral front portion of the body 110, and is configured to acquire an image signal of a surrounding environment of the self-moving device 100, and send the image signal to the first processor 180.

As shown in FIG. 2, the forward portion 111 of the body 110 may bear the bumper 122. During cleaning, when the driving wheel module 141 propels the self-moving device 100 to travel on the ground in the cleaning process, the bumper 122 detects one or more events in a traveling route of the self-moving device 100 via a sensor system disposed on the bumper, such as an infrared sensor. The self-moving device 100, upon detection of an event such as an obstacle or a wall by the bumper 122, may respond to the event, for example, moving away from the obstacle, by controlling the driving wheel module 141.

The first processor 180 is arranged on a main circuit board inside the body 110, and includes a computing processor such as a central processing unit or an application processor, that communicates with a non-transitory memory such as a hard disk, a flash memory or a random access memory. Based on obstacle information fed back by the laser distance sensor, the application processor uses a localization algorithm, such as simultaneous localization and mapping (SLAM, simultaneous localization and mapping in full name), to draw a real-time map of an environment where the self-moving device 100 is located. In addition, a current operating state, position, posture, and the like of the self-moving device 100, such as crossing a doorsill, moving onto a carpet, being at a cliff, being stuck from above or below, having a full dust bin, being picked up, or the like can be comprehensively determined by combining distance information and speed information which are fed back by the sensor disposed on the bumper 122, and the sensing apparatuses such as the cliff sensor, the magnetometer, the accelerometer, the gyroscope, and the odometer. In addition, it further gives specific next action strategies for different situations, such that the self-moving device 100 has better sweeping performance and provides better user experience.

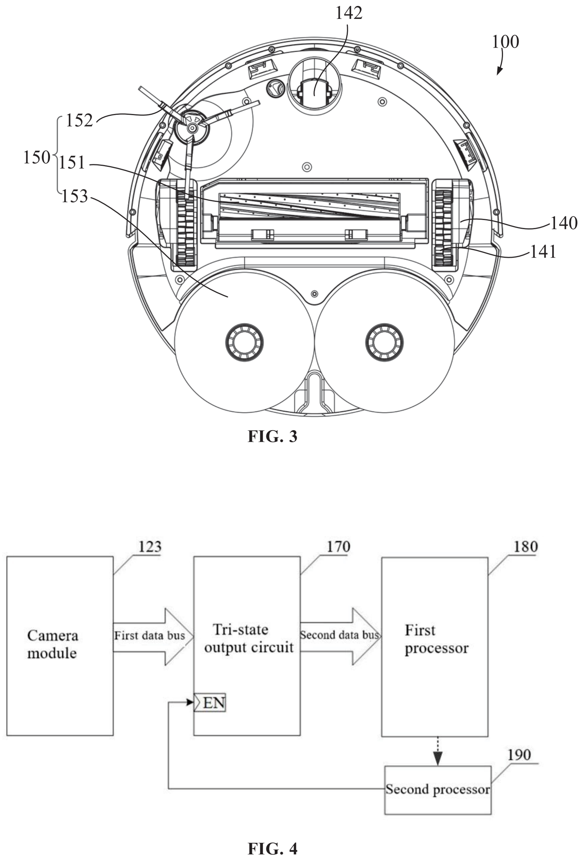

As shown in FIG. 3, the driving apparatus 140 may execute a driving command containing distance and angle information, such as x, y, and 6 components, to manipulate the body 110 to travel across the ground. The driving system 140 includes a driving wheel module 141. The driving wheel module 141 may simultaneously control left wheels and right wheels. In order to control movement of the machine more accurately, it is preferable that the driving wheel module 141 includes a left driving wheel module and a right driving wheel module. The left and right driving wheel modules are disposed along a transversal axis defined by the body 110. In order for the self-moving device 100 to move on the ground more stably or have a higher movement ability, the self-moving device 100 may include one or more driven wheels 142. The driven wheel 142 includes, but is not limited to, a universal wheel. The driving wheel module 141 includes a traveling wheel, a driving motor, and a control circuit for controlling the driving motor. The driving wheel module 141 may also be connected to a circuit for measuring a driving current and an odometer. A driving wheel may be provided with a biased drop-type suspension system, which is movably fastened, for example, rotatably attached to the body 110, and receives spring bias biased downward away from the body 110. The spring bias allows the driving wheel to maintain contact and traction with the ground with a certain ground gripping force, while a cleaning element of the self-moving device 100 is also in contact with the ground with a certain pressure.

The energy system includes a rechargeable battery, such as a nickel-metal hydride battery or a lithium battery. The rechargeable battery may be connected to a charging control circuit, a battery pack charging temperature detection circuit, and a battery undervoltage monitoring circuit, wherein the charging control circuit, the battery pack charging temperature detection circuit, and the battery undervoltage monitoring circuit are then connected to a single-chip microcomputer control circuit. As shown in FIG. 2, the self-moving device 100 is charged by connecting to a base station via charging contact electrodes 130 disposed on a side of the body 110.

As shown in FIG. 2, the human-machine interaction system 160 includes buttons on a panel of a main unit and used by a user to select functions. The human-machine interaction system may further include a display screen and/or an indicator light and/or a horn. The display screen, the indicator light and the horn present a current state or function selection items of the machine to the user. The human-machine interaction system may further include a mobile client program. For a route navigation type self-moving device 100, a mobile phone client may show the user a map of an environment where the device is located, as well as a location of the machine, thereby providing the user with richer and more user-friendly function items.

As shown in FIG. 3, the cleaning system 150 includes a dry cleaning system 151 and/or a wet cleaning system 153, that is, the self-moving device 100 may be a ground sweeping robot or a ground mopping machine. Alternatively, the cleaning system 150 includes a wet cleaning system 153 and a dry cleaning system 151, that is, the self-moving cleaning device may be a sweeping and mopping integrated machine.

The dry cleaning system 151 may include a rolling brush, a dust bin, a dust suction fan, and an air outlet. The rolling brush having a certain interference with the ground sweeps up garbage on the ground and rolls up the garbage to the front of a dust suction inlet between the rolling brush and the dust bin, and then the garbage is sucked into the dust bin by air having a suction force, which is generated by the dust suction fan and passes through the dust bin. The dry cleaning system 151 may further include a side brush 152 having a rotary shaft angled relative to the ground, for moving debris into a region of the rolling brush of the cleaning system 150.

The wet cleaning system 153 may include: a cleaning assembly, a water delivery mechanism, a liquid storage tank, and the like. The cleaning assembly may be disposed below the liquid storage tank, and a cleaning liquid in the liquid storage tank is transported to the cleaning assembly through the water delivery mechanism, such that the cleaning assembly can perform wet cleaning on a plane to be cleaned. The cleaning liquid in the liquid storage tank may also be directly sprayed on the plane to be cleaned. The cleaning assembly achieves cleaning of the plane by spreading the cleaning liquid evenly. Alternatively, the self-moving device 100 is provided with a water outlet communicated with the liquid storage tank, through which the liquid in the liquid storage tank can be transported to the cleaning assembly.

As shown in FIG. 2 and FIG. 3, the cleaning assembly of the wet cleaning system 153 includes at least one cleaning element rotatable relative to the body 110. It should be noted that the cleaning assembly further includes a motion mechanism (not shown in the figures). The entire cleaning assembly may be mounted on the body 110 through the motion mechanism, and the cleaning assembly moves with the movement of the body 110 to achieve a mopping function. The motion mechanism is configured to drive the cleaning element to act. For example, the motion mechanism may drive the cleaning element to raise or lower, and the motion mechanism may also drive the cleaning element to rotate. Thus, depending on the requirement for the cleaning element to contact the surface to be cleaned or not, the raising, lowering and rotating operations of the cleaning element can be achieved through the motion mechanism to meet different functional requirements of the cleaning element. It should be noted that when the cleaning element interferes with the surface to be cleaned for the mopping operation, the motion mechanism drives the cleaning element to perform the rotating operation.

As shown in FIG. 2 and FIG. 3, in the forward direction of the self-moving device 100, the cleaning element of the wet cleaning system 153 is located at the rear of the dry cleaning system 151. The cleaning element may usually be a water-absorbing flexible material such as fabric or sponge. In this scheme, the cleaning element may be at least one rotating disc. Water from the liquid storage tank of the self-moving device 100 is directed to the cleaning element. The moistened cleaning element removes stains on the ground through rotational motion. Specifically, as shown in FIG. 3, the cleaning element includes two discs arranged on the left and right sides along the forward direction of the body 110.

According to the self-moving device 100 provided in embodiments of the present disclosure, the camera module 123 is provided, and the camera module 123 may generally provide various information functions, such as laser acquisition, image acquisition and recognition, and environmental information acquisition, on the self-moving device 100. Therefore, information collected by the camera module 123 is more sensitive than that collected by other sensors disposed on the self-moving device 100.

Further, as shown in FIG. 1 and FIG. 4, in the self-moving device 100 provided in embodiments of the present disclosure, the camera module 123 is configured to acquire an image signal of a surrounding environment of the self-moving device 100, and send the image signal to the first processor 180. The first processor 180 is configured to: receive the image signal, build a map of the surrounding environment of the self-moving device 100 based on the image signal, and/or recognize an obstacle in the surrounding environment of the self-moving device 100.

When the self-moving device 100 performs autonomous exploration in an environmental space, the first processor 180 may perform, based on the SLAM algorithm, localization and mapping via movement and measurement of the self-moving device 100 and based on the image signal of the surrounding environment of the self-moving device 100 sent by the camera module 123, to acquire a surrounding environment map of the self-moving device 100. The surrounding environment map of the self-moving device 100 provides detailed environmental feature data, is suitable for spatial representation in an unstructured environment, and serves as an important basis for navigation and route planning of the self-moving device 100.

The first processor 180 may further recognize an obstacle in the surrounding environment of the self-moving device 100 based upon the reception of the image signal sent by the camera module 123. Specifically, for example, the first processor 180 may extract an environmental feature in the received image signal sent by the camera module 123 according to an image detection technology, and match the environmental feature with a target feature. The target feature may be a living thing (such as a person, a pet, or a plant), a stairway, a wall, a table/chair, a step, a doorsill, or the like. When the environmental feature in the image signal is matched with the target feature, the corresponding target feature can be recognized, such that the obstacle in the surrounding environment of the self-moving device 100 can be recognized.

Generally, as shown in FIG. 2, the body 110 of the self-moving device 100 is further provided with a dust outlet 113, and/or a water inlet 114, and/or a charging contact electrode 130. The self-moving device 100 is further provided with a base station (not shown in the figure) to which the self-moving device is adapted. When completing a cleaning operation, the self-moving device 100 may dock on the base station for a dust collecting operation, a water replenishing operation, a charging operation, or a washing operation.

Further, as shown in FIG. 1 and FIG. 2, in the self-moving device 100 provided in embodiments of the present disclosure, the camera module 123 is disposed at a lateral front portion of the body 110. The dust outlet 113, and/or the water inlet 114, and/or the charging contact electrode 130 of the self-moving device 100 are disposed at a lateral rear portion of the body 110. For example, the dust outlet 113, the water inlet 114, and the charging contact electrode 130 are distributed at the lateral rear portion of the body 110, wherein the cleaning element is disposed behind the bottom of the body 110. The front-rear direction of the self-moving device 100 is as shown by arrows in FIG. 1 and FIG. 2. Therefore, when the self-moving device 100 docks on the base station, and performs the dust collecting operation, and/or the water replenishing operation, and/or the charging operation, and/or the washing operation, the lateral rear portion of the self-moving device 100 is required to face the base station, such that the dust outlet 113, and/or the water inlet 114, and/or the charging contact electrode 130, and/or the cleaning element are/is butted with corresponding components on the base station. However, when the self-moving device 100 is in this posture, the lateral front portion faces the exterior of the base station, such that the camera module 123 at the lateral front portion of the body 110 faces the exterior of the base station. If the camera module 123 operates at this time to continuously acquire the image signal of the surrounding environment of the self-moving device 100 and send the image signal to the first processor 180, the first processor 180 can acquire the image signal acquired by the camera module 123. It should be noted that the first processor 180 may be understood as a master controller of the self-moving device 100. Generally, in addition to processing the received image signal acquired by the camera module 123, the first processor 180 is also used for communicating with the server. Therefore, the first processor 180 is at risk of being illegally hacked. Therefore, there is a security risk that information about the surrounding environment of the self-moving device 100 is exposed by the first processor 180.

Therefore, the user generally prefers that the camera module 123 works normally when the self-moving device 100 performs a cleaning task, such that the self-moving device 100 is guided to run accurately and perform cleaning reliably. In a case that the self-moving device 100 docks on the base station, and performs the dust collecting operation, and/or the water replenishing operation, and/or the charging operation, and/or the washing operation, or that the self-moving device 100 does not require washing, the user does not want the camera module 123 to be in the operating state, to prevent his/her own privacy from being exposed.

In view of this, as shown in FIG. 4, in addition to the camera module 123 and the first processor 180, the self-moving device 100 provided in the present disclosure further includes a second processor 190. The second processor 190 is configured to control, based on the running state of the self-moving device 100, the first processor 180 and the camera module 123 to be connected and disconnected, thereby controlling whether the first processor 180 can receive the image signal sent by the camera module 123.

Therefore, as the second processor 190 controls, based on the running state of the self-moving device 100, the first processor 180 and the camera module 123 to be connected and disconnected, a connected/disconnected state between the first processor 180 and the camera module 123 is matched with the running state of the self-moving device 100. Therefore, in a case that the running state of the self-moving device 100 requires the surrounding environment map of the self-moving device 100 and/or information about the obstacle in the surrounding environment of the self-moving device 100, the second processor 190 can control the first processor 180 and the camera module 123 to be connected. This can control the first processor 180 to receive the image signal sent by the camera module 123, thereby building the surrounding environment map of the self-moving device 100 based on the received image signal, and/or recognizing the obstacle in the surrounding environment of the self-moving device 100. Therefore, the reliability and accuracy of the current running state of the self-moving device 100 are improved. However, in a case that the running state of the self-moving device 100 does not require the surrounding environment map and/or the information about the obstacle in the surrounding environment of the self-moving device 100, the second processor 190 can control the first processor 180 and the camera module 123 to be disconnected. This prevents the first processor 180 from receiving the image signal sent by the camera module 123, thereby avoiding a risk that when the self-moving device 100 is in the current running state, the first processor 180 may compromise the image signal acquired by the camera module 123 and compromise the user's privacy. Therefore, a potential security hazard of compromising the user's privacy is reduced, thereby enhancing the operational security of the self-moving device 100.

In the above embodiments, the running state of the self-moving device 100 may include an operating state and a non-operating state. It should be noted that in the operating state, the self-moving device 100 may use the surrounding environment map of the self-moving device 100 and/or the information about the obstacle in the surrounding environment of the self-moving device 100 to guide the self-moving device 100 to operate accurately and reliably in the operating state. On the contrary, in the non-operating state, the self-moving device 100 may not require using the surrounding environment map of the self-moving device 100 and/or the information about the obstacle in the surrounding environment of the self-moving device 100. If the first processor 180 receives the image signal sent by the camera module 123 in the non-operating state, there is a risk that the user's privacy is exposed because related information is exposed by the first processor 180. It should be noted that the running state of the self-moving device 100 may include other states. In addition, the operating state and the non-operating state may be classified based on actual conditions of the self-moving device 100, which is not specifically limited herein.

Further, when the self-moving device 100 is a self-moving cleaning device, the operating state of the self-moving device 100 may include a cleaning state or a traveling state. However, the cleaning state may be a state in which the self-moving device 100 sweeps or mops a floor, and the traveling state may be a state in which the self-moving device 100 travels from or to the base station or other destination. It should be noted that when the self-moving device 100 is in the cleaning state or the traveling state, the self-moving device 100 can operate accurately and avoid an obstacle accurately by using the surrounding environment map of the self-moving device 100 and/or the information about the obstacle in the surrounding environment of the self-moving device 100. Therefore, the running accuracy and reliability of the self-moving device 100 are improved.

When the self-moving device 100 is a self-moving cleaning device, the non-operating state of the self-moving device 100 may include a charging state, a washing state, a dust collecting state, a water replenishing state, a sleep state, or an off state. It may be understood that in addition to the above-mentioned scenario in which the self-moving device 100 is in the non-operating state, the non-operating state of the self-moving device 100 may further include an assembling state, a maintaining state, or the like, and a drying state in which the self-moving device 100 docks on the base station to dry the wet cleaning element, or the like. It should be noted that the present disclosure only lists data processing logics of the self-moving device 100 in some relatively common application scenarios. During actual applications, the operating state and the non-operating state may include other states of the self-moving device 100. Details are not listed herein.

In the charging state, the self-moving cleaning device docks on the base station, and the charging contact electrode 130 of the self-moving cleaning device is butted with a charging butting component provided on the base station. Then, the self-moving cleaning device is replenished with electric energy.

In the washing state, the self-moving cleaning device docks on the base station, and a cleaning component provided on the base station interferes with the cleaning element of the self-moving cleaning device, to remove dirt on the cleaning element, thereby cleaning the cleaning element. Therefore, the cleaning performance of the cleaning element is improved, and a good wet cleaning effect is ensured.

In the dust collecting state, the self-moving cleaning device docks on the base station, a dust collecting component provided on the base station is butted with the dust outlet 113 in the body 110 of the self-moving cleaning device, and garbage in the dust bin of the self-moving device 100 is collected onto the base station, thereby implementing garbage collection. Therefore, an operation of manually removing garbage in the dust bin is simplified.

In the water replenishing state, the self-moving cleaning device docks on the base station, a water replenishing component provided on the base station is butted with the water inlet 114 in the body 110 of the self-moving cleaning device, and a cleaning liquid in a clean water tank of the base station is replenished into the liquid storage tank of the self-moving cleaning device, so as to avoid a problem that the liquid storage tank is short of the cleaning liquid, making a mopping operation impossible.

In the sleep state, an internal program of the self-moving cleaning device is in a running state, and part of hardware is disabled to conserve power. It may be understood that in the sleep state, the self-moving cleaning device may or may not dock on the base station. In the sleep state, the self-moving cleaning device consumes power.

In the off state, the internal program of the self-moving cleaning device is in an off state, and part of hardware is in an off state. It may be understood that in the off state, the self-moving cleaning device may or may not dock on the base station, and that in the off state, the self-moving cleaning device consumes almost no power, that is, the power consumption is small.

Therefore, according to the self-moving device 100 provided in embodiments of the present disclosure, when the self-moving device 100 is in the operating state, for example, when the self-moving device 100 is in the cleaning state or the traveling state, the second processor 190 controls the first processor 180 and the camera module 123 to be connected, such that the first processor 180 can reliably receive the image signal sent by the camera module 123, thereby building the surrounding environment map of the self-moving device 100 based on the image signal, and/or recognizing the obstacle in the surrounding environment of the self-moving device 100. Therefore, the self-moving device 100 is guided to run smoothly or accurately, to improve the running accuracy and reliability of the self-moving device 100.

When the self-moving device 100 is in the non-operating state, for example, when the self-moving device 100 is in the charging state, the washing state, the dust collecting state, the water replenishing state, the sleep state, or the off state, the second processor 190 controls the first processor 180 and the camera module 123 to be disconnected, such that the first processor 180 cannot receive the image signal sent by the camera module 123. Therefore, a problem that the camera module 123 exposes the user's privacy in the non-operating state can be avoided, thereby improving the operational security of the self-moving device 100.

In other words, according to the above technical solutions, the first processor 180 that is located in the self-moving device 100 and responsible for processing the image signal acquired by the camera module 123 may be made incapable of receiving the image signal output by the camera module 123 when the self-moving device 100 is in the non-operating state. This effectively eliminates a problem that the camera module 123 exposes the user's privacy when the self-moving device is in the non-operating state. Therefore, the security performance of the self-moving device 100 is improved.

It should be noted that as shown in FIG. 1 and FIG. 2, the camera module 123 of the self-moving device 100 provided in embodiments of the present disclosure is disposed at the lateral front portion of the body 110; the dust outlet 113, and/or the water inlet 114, and/or the charging contact electrode 130 of the self-moving device 100 are disposed at the lateral rear portion of the body 110; and the cleaning element of the self-moving device 100 is located behind the bottom of the body 110. Therefore, when the self-moving device 100 docks on the base station and is in the dust collecting state, and/or the water replenishing state, and/or the charging state, and/or the washing state, the camera module 123 faces the exterior of the base station. In this case, if the first processor 180 and the camera module 123 are connected, there is a problem that the user's privacy is exposed. Therefore, by using the second processor 190 to control the first processor 180 and the camera module 123 to be disconnected, the problem that the camera module 123 exposes the user's privacy in the non-operating state can be avoided.

In other embodiments (not shown in the figures), if the camera module and one of the dust outlet, the water inlet, and the charging contact electrode are located on the same side of the body, that is, when the self-moving device docks on the base station and is in the dust collecting state, and/or the water replenishing state, and/or the charging state, and/or the washing state, the camera module faces the interior of the base station in the at least one of these states. In this case, the second processor may also control the first processor and the camera module to be disconnected. This prevents the first processor from receiving the image signal sent by the camera module. Therefore, the workload of the first processor 180 can be reduced, thereby improving the operating efficiency of the first processor and reducing energy consumption.

As shown in FIG. 4, in some possible embodiments provided in the present disclosure, the self-moving device 100 further includes a tri-state output circuit 170 disposed between the first processor 180 and the camera module 123.

The tri-state output circuit 170 includes a data input terminal, a data output terminal, and an enable terminal EN. The tri-state output circuit 170 can control, based on whether the enable signal received by the enable terminal EN is an enable signal, the data input terminal and the data output terminal to be connected or disconnected. For example, if the enable terminal EN receives an enable signal, the data input terminal and the data output terminal of the tri-state output circuit 170 are connected. If a signal received by the enable terminal EN is a disable signal, the data input terminal and the data output terminal of the tri-state output circuit 170 are disconnected.

In this embodiment, the data output terminal of the camera module 123 is electrically connected to the data input terminal of the tri-state output circuit 170 by using a first data bus, and the data output terminal of the tri-state output circuit 170 is electrically connected to the data input terminal of the first processor 180 by using a second data bus. Therefore, the first processor 180 and the camera module 123 are connected by using the tri-state output circuit 170, such that the first processor 180 and the camera module 123 can be controlled to be connected and disconnected based on whether a signal received by the enable terminal EN of the tri-state output circuit 170 is an enable signal. The structure is simple and easy to implement.

In the above embodiments, when the self-moving device 100 is in the operating state, the second processor 190 sends an enable signal to the tri-state output circuit 170, such that the first processor 180 and the camera module 123 are connected; and when the self-moving device 100 is in the non-operating state, the second processor 190 sends a disable signal to the tri-state output circuit 170, such that the first processor 180 and the camera module 123 are disconnected.

In other words, in the self-moving device 100 provided in embodiments of the present disclosure, the second processor 190 is connected to the enable terminal EN of the tri-state output circuit 170, and the second processor 190 sends different signals to the enable terminal EN of the tri-state output circuit 170 based on a running state of the self-moving device 100, so that a connected/disconnected state of the data input terminal and the data output terminal of the tri-state output circuit 170 is controlled, thereby controlling the first processor 180 and the camera module 123 to be connected and disconnected.

Specifically, when the self-moving device 100 is in the operating state, for example, when the self-moving device 100 is in the cleaning state or a running state, the second processor 190 sends an enable signal to the tri-state output circuit 170, and the tri-state output circuit 170 connects the data input terminal of the tri-state output circuit 170 and the data output terminal based on the enable signal received by the enable terminal EN. Therefore, the first processor 180 and the camera module 123 are connected. Therefore, the first processor 180 can reliably receive the image signal sent by the camera module 123, thereby building the surrounding environment map of the self-moving device 100 based on the image signal, and/or recognizing the obstacle in the surrounding environment of the self-moving device 100. Therefore, the self-moving device 100 is guided to run smoothly or accurately, to improve the running accuracy and reliability of the self-moving device 100.

When the self-moving device 100 is in the non-operating state, for example, when the self-moving device 100 is in the charging state, the washing state, the dust collecting state, the water replenishing state, the sleep state, or the off state, the second processor 190 sends a disable signal to the tri-state output circuit 170, and the tri-state output circuit 170 disconnects the data input terminal of the tri-state output circuit 170 from the data output terminal based on the disable signal received by the enable terminal EN. Therefore, the first processor 180 and the camera module 123 are disconnected. Therefore, the first processor 180 cannot receive the image signal sent by the camera module 123. Therefore, a problem that the camera module 123 exposes the user's privacy in the non-operating state can be avoided, thereby improving the operational security of the self-moving device 100.

Specifically, referring to FIG. 4, the camera module 123 provided on the self-moving device 100 may process a first sensing signal output by a CMOS (Complementary Metal-Oxide-Semiconductor, complementary metal-oxide-semiconductor) image sensor into a signal that can be recognized by the first processor 180, for example, an SCI (Serial Communication Interface, serial communication interface) signal or the like. Then, the camera module 123 may transfer the processed signal (namely, the first sensing signal) to the tri-state output circuit 170 by using the first data bus. Further, when the self-moving device 100 is in the operating state, for example, when the self-moving cleaning device is in the cleaning state or the traveling state, the second processor 190 sends an enable signal to the enable terminal EN of the tri-state output circuit 170. In this case, a loop between the first data bus and the second data bus can be connected, that is, the data input terminal and the data output terminal of the tri-state output circuit are connected. In this case, the first sensing signal output by the camera module 123 can be received by the first processor 180, and the first processor 180 may perform operations such as mapping and/or obstacle recognition based on the received first sensing signal.

On the contrary, when the self-moving device 100 is in the non-operating state, for example, when the self-moving device 100 is in the charging state, the washing state, the dust collecting state, the water replenishing state, the sleep state, or the off state, the second processor 190 outputs a disable signal (for example, a high-impedance state signal) to the enable terminal EN of the tri-state output circuit 170. In this case, the loop between the first data bus and the second data bus is disconnected, that is, the data input terminal and the data output terminal of the tri-state output circuit 170 are disconnected. In this case, the first sensing signal output by the camera module 123 cannot be received by the first processor 180, and the first processor 180 is also incapable of performing operations such as map drawing or obstacle recognition. Therefore, a potential security hazard that the camera module 123 exposes the user's privacy can be reduced.

In one possible embodiment provided in the present disclosure, the first processor 180 is further configured to detect the running state of the self-moving device 100, and send a detection result to the second processor 190.

In this embodiment, as the first processor 180 detects the running state of the self-moving device 100, and sends the detection result to the second processor 190, the second processor 190 transmits an enable signal or a disable signal corresponding to the running state to the enable terminal EN of the tri-state output circuit 170 based on the received running state of the self-moving device 100, and the data input terminal and the data output terminal of the tri-state output circuit 170 are connected or disconnected. Therefore, a connection state between the first processor 180 and the camera module 123 can be matched with the running state of the self-moving device 100. This reduces a risk that the user's privacy is exposed because the first processor 180 can still receive the image signal acquired by the camera module 123 in the non-operating state. Therefore, the operational security of the device is improved.

The first processor 180 may detect the running state of the self-moving device 100 based on an operating condition of each apparatus in the self-moving device 100. For example, when the driving system 140 of the self-moving device 100 is operating, it indicates that the self-moving device 100 is in the traveling state. In this case, the first processor 180 may determine, via detection based on the state that the driving system 140 has operated, that the self-moving device 100 is in the traveling state, and transmit, to the second processor 190, a detection result that the self-moving device 100 is in the traveling state.

For another example, when the cleaning system 150 of the self-moving device 100 is operating, for example, when the roller brush or the cleaning element of the self-moving device 100 is operating, it indicates that the self-moving device 100 is in the cleaning state. In this case, the first processor 180 may determine, via detection based on the state that the rolling brush or the cleaning element has operated, that the self-moving device 100 is in the cleaning state, and transmit, to the second processor 190, a detection result that the self-moving device 100 is in the cleaning state.

For another example, when the charging contact electrode 130 of the self-moving device 100 conducts electricity, it indicates that the self-moving device 100 may dock on the base station and be in the charging state. In this case, the first processor 180 may determine, via detection based on the state that the charging contact electrode 130 is conducting electricity, that the self-moving device 100 is in the charging state, and transmit, to the second processor 190, a detection result that the self-moving device 100 is in the charging state.

It may be understood that the self-moving device 100 being in the sleep state or the off state may also be detected according to the same method described above. This is not listed and explained one by one in the present application.

The self-moving device 100 may further be provided with a detection apparatus related to the running state of the self-moving device 100. The detection apparatus may be a contact sensor, a position sensor, or other sensor that meets a requirement. The first processor 180 may receive a detection signal of the detection apparatus, thereby detecting the running state of the self-moving device 100 based on the detection signal of the detection apparatus. For example, when the contact sensor detects that there is other component in contact with an appropriate position of the dust outlet 113, it indicates that the dust outlet 113 may be butted with the dust collecting component on the base station, and the self-moving device 100 may dock on the base station and be in the dust collecting state. In this case, the first processor 180 may determine, via detection based on the state that the contact sensor detects that there is other component in contact with the appropriate position of the dust outlet 113, that the self-moving device 100 is in the dust collecting state, and transmit, to the second processor 190, a detection result that the self-moving device 100 is in the dust collecting state.

It may be understood that the self-moving device 100 being in the water replenishing state or the washing state may also be detected according to the same method described above. This is not listed and explained one by one in the present application.

It should be noted that in other embodiments, the second processor 190 may also directly detect the running state of the self-moving device 100, for example, the second processor 190 may detect the running state of the self-moving device 100 based on an operating condition of each apparatus in the self-moving device 100. The running state of the self-moving device 100 may also be detected by the detection apparatus that is provided on the self-moving device 100 and related to the operating state of the self-moving device 100, wherein a detection principle may be the same as or different from the detection principle of the running state of the first processor 180, which is not specifically described herein again.

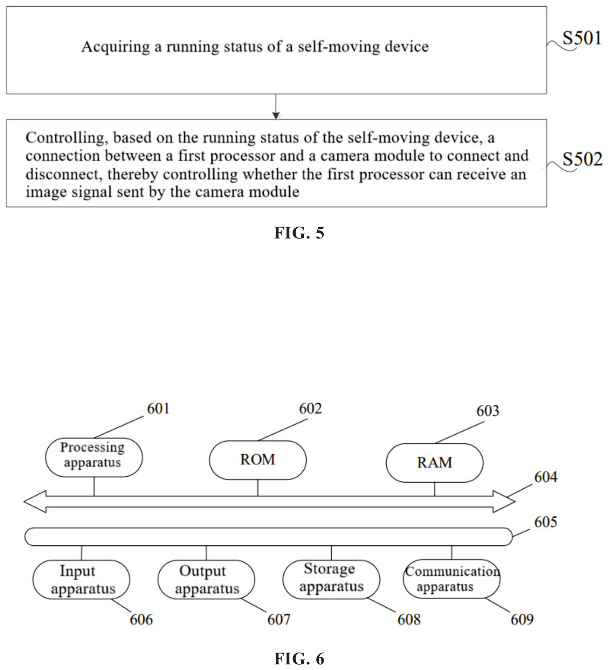

The present disclosure further provides a control method of a self-moving device. The method is applied to the second processor of the self-moving device in any one of the above embodiments. As shown in FIG. 5, the method includes the following steps.

In step S501: a running state of the self-moving device is acquired.

The second processor may acquire the running state of the self-moving device based on a received detection result of the running state of the self-moving device sent by the first processor. It should be noted that the second processor may also detect the running state of the self-moving device based on an operating condition of each apparatus in the self-moving device, or the second processor may detect the running state of the self-moving device based on a detection result of the detection apparatus that is provided on the self-moving device and related to the running state of the self-moving device. A control process in which the first processor or the second processor detects the running state of the self-moving device has been described in the foregoing description of the self-moving device. Details are not described herein again.

In step S502: based on the running state of the self-moving device, the first processor and the camera module are controlled to be connected and disconnected, thereby controlling whether the first processor can receive the image signal sent by the camera module.

In the control method of the self-moving device provided in this embodiment of the present disclosure, the second processor controls, based on the running state of the self-moving device, the first processor and the camera module to be connected and disconnected, such that a connected/disconnected state between the first processor and the camera module is matched with the running state of the self-moving device. Therefore, in a case that the running state of the self-moving device requires the surrounding environment map of the self-moving device and/or information about the obstacle in the surrounding environment of the self-moving device, by using the second processor to control the first processor and the camera module to be connected, the first processor can be controlled to receive the image signal sent by the camera module, such that the surrounding environment map of the self-moving device is built based on the received image signal, and/or the obstacle in the surrounding environment of the self-moving device is recognized. Therefore, the reliability and accuracy of the self-moving device in the current running state are improved. However, in a case that the running state of the self-moving device does not require the surrounding environment map and/or the information about the obstacle in the surrounding environment of the self-moving device, the second processor can control the first processor and the camera module to be disconnected. This prevents the first processor from receiving the image signal sent by the camera module, thereby avoiding a risk that when the self-moving device is in the current running state, the first processor may compromise the image signal acquired by the camera module and compromise the user's privacy. Therefore, a potential security hazard of compromising the user's privacy is reduced, thereby improving the operational security of the self-moving device.

Further, as a refinement and extension of the specific implementation of the above embodiments, to completely illustrate the specific implementation process of this embodiment, controlling, based on the running state of the self-moving device, the first processor and the camera module to be connected and disconnected may include the following steps.

In step S502-1: when the self-moving device is in an operating state, the first processor and the camera module are controlled to be connected.

In step S502-2: when the self-moving device is in a non-operating state, the first processor and the camera module are controlled to be disconnected.

The running state of the self-moving device may include an operating state and a non-operating state. It should be noted that in the operating state, the self-moving device may use the surrounding environment map of the self-moving device and/or the information about the obstacle in the surrounding environment of the self-moving device to guide the self-moving device to operate accurately and reliably in the operating state. On the contrary, in the non-operating state, the self-moving device may not require using the surrounding environment map of the self-moving device and/or the information about the obstacle in the surrounding environment of the self-moving device. If the first processor receives the image signal sent by the camera module in the non-operating state, there is a risk that the user's privacy is exposed because related information is exposed by the first processor. It should be noted that the running state of the self-moving device may include other states, and the operating state and the non-operating state may be classified based on actual conditions of the self-moving device, which is not specifically limited herein.

In this embodiment, when the self-moving device is in an operating state, the second processor controls the first processor and the camera module to be connected, such that the first processor can reliably receive the image signal sent by the camera module, thereby building the surrounding environment map of the self-moving device based on the image signal, and/or recognizing the obstacle in the surrounding environment of the self-moving device. Therefore, the self-moving device is guided to run smoothly or accurately, to improve the running accuracy and reliability of the self-moving device. On the contrary, when the self-moving device is in the non-operating state, the second processor controls the first processor and the camera module to be disconnected, such that the first processor cannot receive the image signal sent by the camera module. Therefore, a problem that the camera module exposes the user's privacy in the non-operating state can be avoided, thereby improving the operational security of the self-moving device.

Therefore, according to the above technical solutions, the first processor that is located in the self-moving device and responsible for processing the image signal acquired by the camera module may be made incapable of receiving the image signal output by the camera module when the self-moving device is in the non-operating state. This effectively eliminates the problem that the camera module exposes the user's privacy when the self-moving device is in the non-operating state, thereby improving the security performance of the self-moving device.

It should be noted that for other corresponding descriptions of the steps involved in the control method of the self-moving device provided in embodiments of the present disclosure, reference may be made to the descriptions of the corresponding embodiments of the above self-moving device, which will not be repeated herein.

Based on the above control method of the self-moving device, to achieve the above objects, an embodiment of the present disclosure further provides a computer device. The computer device includes a storage medium and a processor. The storage medium is configured to store a computer program. The processor is configured to execute the computer program to implement the control method of the self-moving device provided in the above embodiments.

Optionally, the computer device may further include a user interface, a network interface, a camera, a radio frequency (Radio Frequency, RF) circuit, a sensor, an audio circuit, a WI-FI module, and the like. The user interface may include a display (Display), an input unit such as a keyboard (Keyboard), and the like. Optionally, the user interface may further include a USB interface, a card reader interface, and the like. Optionally, the network interface may include a standard wired interface, a wireless interface (such as a Bluetooth interface and a WI-FI interface), and the like.

It may be understood by those skilled in the art that the structure of the self-moving device provided by this embodiment does not constitute a limitation to the computer device. The self-moving device may include more or less components, or a combination of some components, or the components arranged in a different fashion.

It should be noted that in the exemplary implementation of the present disclosure, a map construction method of the computer device may be implemented by the self-moving device (for example, a self-moving mopping device, or a sweeping and mopping integrated machine). In other words, various steps of the control method of the self-moving device may be executed by the self-moving device. In this case, a control process of the computer device may be configured in the self-moving device.

Based on the method provided by the above embodiments, correspondingly, an embodiment of the present disclosure further provides a memory medium having a computer program stored thereon, wherein the program, when executed by a processor, implements the control method of the self-moving device provided by the above embodiments.

Based on such an understanding, the technical solutions of the present disclosure may be embodied in the form of a software product. The software product may be stored in a non-volatile storage medium (which may be a CD-ROM, a USB flash drive, a mobile hard disk, or the like), and includes several instructions to cause a computer device (which may be a personal computer, a server, a network device, or the like) to execute the method described in various implementation scenarios of the present disclosure.

The storage medium may further include an operating system and a network communication module. The operating system is a program that manages and stores hardware and software resources of the computer device, and supports the running of information processing programs and other software and/or programs. The network communication module is configured to implement communication between various controls inside the storage medium and communication with other hardware and software in the physical device.

As shown in FIG. 6, the computer device may include a processing apparatus 601 (such as a central processing unit, or a graphics processing unit) that may execute various appropriate actions and processing according to a program stored in a read-only storage medium (ROM 602) or a program loaded from a storage apparatus 608 into a random-access storage medium (RAM 603). In the RAM 603, various programs and data required for operation of an electronic self-walking robot are further stored. The processing apparatus 601, the ROM 602, and the RAM 603 are connected to each other by using a bus 604. An input/output (I/O) interface is also connected to the bus 604.

Generally, the following apparatuses may be connected to the I/O interface 605: an input apparatus 606 including, for example, a touch screen, a touchpad, a keyboard, a mouse, a camera, a microphone, an accelerometer, or a gyroscope; an output apparatus 607 including, for example, a liquid crystal display (LCD), a speaker, or a vibrator; a storage apparatus 608 including, for example, a hard disk; and a communication apparatus 609. The communication apparatus 609 may allow the computer device to perform wireless or wired communication with other computer devices to exchange data. Although FIG. 6 shows computer devices with various apparatuses, it should be understood that it is not required to implement or provide all shown apparatuses. Alternatively, more or fewer apparatuses may be implemented or provided.

In particular, according to embodiments of the present disclosure, the process described above with reference to the flowchart may be implemented as a self-walking robot software program. For example, an embodiment of the present disclosure includes a computer device software program product that includes a computer program carried on a readable medium, and the computer program includes program codes for executing the method shown in the flowchart of FIG. 5. In such an embodiment, the computer program may be downloaded from a network and installed by means of the communication apparatus 609, installed from the storage apparatus 608, or installed from the ROM 602. When the computer program is executed by the processing apparatus 601, the foregoing functions defined in the method in embodiments of the present disclosure are executed.

Through the description of the above implementations, those skilled in the art can clearly understand that the present disclosure can be implemented by means of software and a necessary general-purpose hardware platform, or by hardware.

Those skilled in the art may understand that the accompanying drawings are merely schematic diagrams of a preferred implementation scenario, and units or processes in the accompanying drawings are not necessarily essential for implementing the present disclosure. Those skilled in the art may understand that units in apparatuses in the implementation scenario may be distributed in the apparatuses in the implementation scenario according to the description of the implementation scenario, and may also be correspondingly changed and configured in one or more apparatuses different from that in the current implementation scenario. The units in the above-mentioned implementation scenarios may be merged into a single unit or be sub-divided into a plurality of sub-units.

The above serial numbers of the present disclosure are merely for description, and do not represent the priority of the implementation scenarios. Only a few specific implementation scenarios of the present disclosure are disclosed above. However, the present disclosure is not limited thereto. Any changes that can be conceived by those skilled in the art shall fall within the protection scope of the present disclosure.

## Claims

1. A self-moving device, comprising a camera module, a first processor, and a second processor, wherein
the camera module is configured to acquire an image signal of a surrounding environment of the self-moving device, and send the image signal to the first processor;
the first processor is configured to: receive the image signal, build a map of the surrounding environment of the self-moving device based on the image signal, and/or recognize an obstacle in the surrounding environment of the self-moving device; and
the second processor is configured to control, based on a running state of the self-moving device, the first processor and the camera module to be connected and disconnected, thereby controlling whether the first processor can receive the image signal sent by the camera module.

2. The self-moving device according to claim 1, wherein when the self-moving device is in an operating state, the second processor controls the first processor and the camera module to be connected; and
when the self-moving device is in a non-operating state, the second processor controls the first processor and the camera module to be disconnected.

3. The self-moving device according to claim 1 or 2, further comprising: a tri-state output circuit disposed between the first processor and the camera module.

4. The self-moving device according to claim 3, wherein when the self-moving device is in the operating state, the second processor sends an enable signal to the tri-state output circuit, such that the first processor and the camera module are connected; and
when the self-moving device is in the non-operating state, the second processor sends a disable signal to the tri-state output circuit, such that the first processor and the camera module are disconnected.

5. The self-moving device according to claim 4, wherein the first processor is further configured to detect the running state of the self-moving device, and send a detection result to the second processor.

6. The self-moving device according to any one of claims 2 to 5, wherein the self-moving device is a self-moving cleaning device.

7. The self-moving device according to claim 6, wherein the operating state comprises a cleaning state or a traveling state.

8. The self-moving device according to claim 6, wherein the non-operating state comprises: a charging state, a washing state, a dust collecting state, a water replenishing state, a sleep state, or an off state.

9. A control method of a self-moving device, wherein the method is applied to the second processor of the self-moving device according to any one of claims 1 to 8, and the method comprises:
acquiring a running state of the self-moving device; and
controlling, based on the running state of the self-moving device, the first processor and the camera module to be connected and disconnected, thereby controlling whether the first processor can receive the image signal sent by the camera module.

10. The control method of the self-moving device according to claim 9, wherein controlling, based on the running state of the self-moving device, the first processor and the camera module to be connected and disconnected comprises:
when the self-moving device is in an operating state, controlling the first processor and the camera module to be connected; and
when the self-moving device is in a non-operating state, controlling the first processor and the camera module to be disconnected.

11. A storage medium, having a computer program stored thereon, wherein the computer program, when executed by a processor, implements the steps of the method according to claim 9 or 10.

12. A computer device, comprising a memory, a processor, and a computer program stored in the memory and runnable on the processor, wherein the computer program, when executed by the processor, implements the steps of the method according to claim 9 or 10.
